# EUROPÄISCHE PATENTANMELDUNG

(11) **EP 3 054 523 A1**
(43) Veröffentlichungstag der Anmeldung: **10.08.2016**
(21) Anmeldenummer: 15153762.8
(22) Anmeldetag: 04.02.2015
(51) Int. Cl.: H01M 10/48, H01M 2/02, H01M 2/12

(54) **Speichervorrichtung mit wenigstens einer elektrochemischen Energiespeicherzelle sowie Verfahren zum Überwachen einer solchen Speichervorrichtung**

(71) Anmelder: Siemens Aktiengesellschaft, 80333 München (DE)
(72) Erfinder: Rabbers, Jacob Johan, 91083 Baiersdorf (DE); Schricker, Barbara, 91058 Erlangen (DE)

(57) **Zusammenfassung**

Die Erfindung betrifft eine Speichervorrichtung (10) mit wenigstens einer elektrochemischen Energiespeicherzelle (12), welche zumindest ein Gehäuse (14) und einen in dem Gehäuse (14) aufgenommenen Elektrolyten aufweist, wobei an dem Gehäuse (14) wenigstens ein sich bei einer Verformung des Gehäuses (14) mitverformender Sensor (18) angeordnet ist, mittels welchem infolge der Verformung des Sensors (18) die Verformung des Gehäuses (14) erfassbar ist.

## Beschreibung

Die Erfindung betrifft eine Speichervorrichtung gemäß dem Oberbegriff von Patentanspruch 1 sowie ein Verfahren zum Überwachen einer solchen Speichervorrichtung.

Derartige Speichervorrichtungen mit wenigstens einer elektrochemischen Energiespeicherzelle sind aus dem allgemeinen Stand der Technik, beispielsweise aus dem Serienfahrzeugbau, bereits hinlänglich bekannt. Die Energiespeicherzelle weist zumindest ein Gehäuse und einen in dem Gehäuse aufgenommenen Elektrolyten auf, wobei der Elektrolyt beispielsweise flüssig beziehungsweise als Flüssigkeit ausgebildet ist. Die Speichervorrichtung ist beispielsweise eine Batterie, welche zum Speichern von elektrischer Energie beziehungsweise elektrischem Strom dient. Eine solche Batterie kommt beispielsweise bei Elektrofahrzeugen oder Hybrid-Fahrzeugen zum Einsatz. Da die Speichervorrichtung beziehungsweise die elektrochemische Energiespeicherzelle die Grundlagen der Elektrochemie nutzt, um Energie, insbesondere elektrische Energie, zu speichern, wird die Speichervorrichtung auch als elektrochemischer Energiespeicher bezeichnet.

In der Regel umfasst ein solcher elektrochemischer Energiespeicher eine Vielzahl von einzelnen elektrochemischen Energiespeicherzellen, welche der Einfachheit wegen auch als Zellen oder Speicherzellen bezeichnet werden. Dabei können die Speicherzellen in Reihe und/oder parallel zueinander verschaltet sein. Eine solche Speicherzelle umfasst beispielsweise einen Doppelschichtkondensator oder ist als Lithium-Ionen-Zelle ausgebildet, so dass die Batterie beispielsweise insgesamt als Lithium-Ionen-Batterie ausgebildet ist. Üblicherweise wird die jeweilige Zelle zusammen mit einer Steuerelektronik zum Ansteuern und Überwachen, das heißt Regeln oder Steuern und Überwachen, der Zelle in ein Gehäuse gepackt, wodurch ein sogenanntes Modul gebildet wird. Ein Speichersystem kann dabei aus mehreren solcher Module bestehen, die zusammen in einem weiteren Gehäuse, einem sogenannten Rack, montiert sein können. Große Gesamtsysteme können aus mehreren Racks gebildet sein, die zum Beispiel in einem Container stehen. Ein solches Gesamtsystem kann mehrere hundert bis viele tausend Einzelzellen, das heißt elektrochemische Energiespeicherzellen umfassen.

Elektrochemische Energiespeicherzellen beziehungsweise ihre Gehäuse beinhalten im Inneren nicht nur den Elektrolyten, sondern auch Elektrodenmaterialien, welche im normalen Betrieb der Speichervorrichtung in dem Gehäuse sicher gekapselt sind. Solange die Speicherzellen verschlossen sind und bestimmungsgemäß genutzt werden, geht von den Speicherzellen in der Regel keine Gefahr aus. Unter dem normalen Betrieb und der bestimmungsgemäßen Nutzung ist zu verstehen, dass Betriebsparameter wie Strom, Spannung und Temperatur innerhalb vorgebbarer und beispielsweise von einem Hersteller der Speichervorrichtung spezifizierter Grenzen liegen.

Wird die Speichervorrichtung außerhalb dieser spezifizierten Grenzen oder Grenzwerte betrieben, so kann es innerhalb der jeweiligen Speicherzelle zu ungünstigen Veränderungen der Elektroden und des Elektrolyts kommen. Außerdem kann der vereinzelte Einsatz von Speicherzellen mit Produktionsfehlern trotz umfangreicher und intensiver Qualitätskontrollen nicht vollkommen ausgeschlossen werden. Im Fehlerfall kann es zur Temperaturerhöhung und Gasentwicklung im Inneren der Speicherzelle, insbesondere des Gehäuses, kommen, so dass sich die jeweilige Speicherzelle aufblähen und gegebenenfalls bersten kann. Speicherzellen, die in der Nähe einer solchen sich aufblähenden und gegebenenfalls berstenden Zelle angeordnet sind, können in Mitleidenschaft gezogen werden. Aufgabe der vorliegenden Erfindung ist es daher, eine Speichervorrichtung der eingangs genannten Art sowie ein Verfahren zu schaffen, mittels welchem sich ein besonders sicherer Betrieb der Speichervorrichtung realisieren lässt.

Diese Aufgabe wird durch eine Speichervorrichtung mit den Merkmalen des Patentanspruchs 1 sowie durch ein Verfahren mit den Merkmalen des Patentanspruchs 7 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Speichervorrichtung mit wenigstens einer elektrochemischen Energiespeicherzelle, welche auch als Zelle oder Speicherzelle bezeichnet wird. Die elektrochemische Energiespeicherzelle (Speicherzelle) weist zumindest ein Gehäuse und einen in dem Gehäuse aufgenommenen Elektrolyten auf. Der Elektrolyt ist beispielsweise flüssig beziehungsweise als Flüssigkeit ausgebildet. In der Speicherzelle kann Energie, insbesondere elektrische Energie beziehungsweise elektrischer Strom, gespeichert werden. Die Speichervorrichtung ist beispielsweise eine Batterie oder ein anderer Energiespeicher, mittels welcher beziehungsweise welchem Energie insbesondere in Form von elektrischer Energie gespeichert werden kann.

Um nun einen besonders sicheren Betrieb der Speichervorrichtung zu realisieren, ist es erfindungsgemäß vorgesehen, dass an dem Gehäuse der Speicherzelle wenigstens ein sich bei einer Verformung des Gehäuses mitverformender Sensor angeordnet ist, mittels welchem infolge der Verformung des Sensors die Verformung des Gehäuses erfassbar ist. Beispielsweise stellt der Sensor ein die Verformung des Sensors charakterisierendes Signal bereit, welches somit die Verformung des Gehäuses charakterisiert, da die Verformung des Sensors durch eine Verformung des Gehäuses bewirkt wird. Anhand dieses Signals kann schließlich eine unerwünschte beziehungsweise übermäßige Verformung des Gehäuses detektiert werden.

Unter einer solchen, mittels des Sensors erfassbaren Verformung des Gehäuses ist beispielsweise zu verstehen, dass das Gehäuse verformt wird, ohne jedoch zu reißen oder zu bersten, so dass also noch kein Loch im Gehäuse auftritt, durch welches der Elektrolyt aus dem Gehäuse ausströmen könnte. Bei einer solchen Verformung nimmt beispielsweise ein Umfang des Gehäuses zu, so dass das sich Gehäuse beispielsweise aufbläht. Dabei wird der Sensor mitverformt, so dass der Sensor in zumindest einer Dimension größer wird. Überschreiten die Verformung beziehungsweise Vergrößerung des Gehäuses und die damit einhergehende Verformung beziehungsweise Vergrößerung des Sensors einen vorgebbaren Schwellenwert, so kann auf eine übermäßige beziehungsweise unerwünschte Verformung und beispielsweise auf eine Beschädigung beziehungsweise einen unzulässigen Betrieb der Speicherzelle rückgeschlossen werden.

Unter der mittels des Sensors erfassbaren Verformung des Gehäuses ist beispielsweise ferner zu verstehen, dass in dem Gehäuse eine Öffnung entsteht, da das Gehäuse beispielsweise birst, bricht oder reißt. Mit anderen Worten wird das Gehäuse beispielsweise derart verformt, dass wenigstens eine unerwünschte Durchgangsöffnung im Gehäuse entsteht, durch welche der Elektrolyt ausströmen könnte. Auch hierbei wird der Sensor mitverformt, so dass mittels des Sensors die Entstehung der Durchgangsöffnung erfasst werden kann. Unter der Verformung des Sensors ist zu verstehen, dass der Sensor infolge der Verformung des Gehäuses beispielsweise derart verformt wird, dass wenigstens eine Erstreckung des Sensors verändert, insbesondere vergrößert, wird, ohne dass jedoch der Sensor zerstört wird, das heißt beispielsweise reißt, bricht oder birst. Ferner kann unter der Verformung des Sensors verstanden werden, dass der Sensor derart verformt wird, dass der Sensor zerstört wird, beispielsweise bricht, reißt oder birst. Eine solche Zerstörung des Sensors erfolgt beispielsweise dann, wenn das Gehäuse besonders stark verformt wird.

Insgesamt ist es erfindungsgemäß vorgesehen, dass mittels des Sensors die Verformung des Gehäuses und somit der Speicherzelle bereits detektiert werden kann, bevor es zu einem Öffnen der Speicherzelle beziehungsweise des Gehäuses kommt. Zumindest jedoch kann mittels des Sensors ein unerwünschtes Öffnen des Gehäuses erfasst werden. In der Folge ist es möglich, frühzeitig Schutzmaßnahmen zu ergreifen, um aus dem Verformen beziehungsweise Öffnen der Speicherzelle resultierende, etwaige Folgeschäden zu verhindern beziehungsweise in ihrem Ausmaß gering zu halten.

Hintergrund der Erfindung ist, dass ein Austreten des Elektrolyts aus dem Gehäuse grundsätzlich verhindert, zumindest jedoch sicher und frühzeitig erfasst werden sollte, um unerwünschte, aus dem Austreten des Elektrolyts resultierende Folgeschäden vermeiden oder zumindest gering halten zu können. Ein solches Austreten oder übermäßiges Verformen des Gehäuses resultiert beispielsweise aus einer Fehlfunktion der Speicherzelle, in deren Folge die Speicherzelle außerhalb vorgegebener Grenzwerte betrieben wird.

Es kann vorgesehen sein, dass in elektrochemischen Energiespeichern zum Schutz vor nicht bestimmungsgemäßem Gebrauch elektronische Überwachungseinrichtungen eingesetzt werden. Der Qualitätsstandard von elektrochemischen Energiespeichern wird ständig verbessert, trotzdem können eventuelle Produktionsfehler in der Zellherstellung, der potentielle Ausfall elektronischer Schutzsysteme oder ein unsachgemäßer Gebrauch nicht komplett eliminiert werden. In herkömmlichen Speichervorrichtungen kann nicht direkt erkannt werden, wenn sich eine Speicherzelle übermäßig verformt oder gar unerwünschterweise öffnet. Das Überwachen einer elektrischen Spannung der Speicherzelle und/oder einer elektrischen Spannung von mehrere Speicherzellen umfassenden Zellverbunden sowie alternativ oder zusätzlich die Überwachung von Temperaturen an geeigneten Stellen, stellen lediglich indirekte Maßnahmen dar, mittels welchen eine übermäßige Verformung und ein Öffnen einer Speicherzelle gegebenenfalls erfasst werden können. Hierbei handelt es sich lediglich um einen Hinweis, dass die Speichervorrichtung Auffälligkeiten zeigt, welche auf einen von einem Normalbetrieb unterschiedlichen, unerwünschten Betrieb hindeuten. Ein direkter Nachweis, dass eine Speicherzelle übermäßig verformt oder geöffnet ist, kann nicht erfolgen.

Kommen beispielsweise Doppelschichtkondensatoren zum Einsatz, so können Speicherzellen, aus deren Gehäuse langsam Elektrolyt entweicht, noch über einen längeren Zeitraum ihre Zellspannung aufrechterhalten. In der Zwischenzeit könnte weiter Elektrolyt austreten, ohne dass bereits Schutzmaßnahmen eingeleitet werden.

Bei der erfindungsgemäßen Speichervorrichtung ist es nun möglich, unerwünschte, übermäßige Verformungen und insbesondere ein unerwünschtes Öffnen des Gehäuses beziehungsweise der elektrochemischen Energiespeicherzelle direkt zu detektieren, da der Sensor am Gehäuse angeordnet ist und demzufolge bei einer Verformung des Gehäuses mitverformt wird. Die Verformung beziehungsweise eine Beschädigung der Speicherzelle muss somit nicht indirekt über Temperaturen und/oder elektrische Spannungen ermittelt werden, sondern kann direkt anhand der Verformung des Sensors selbst erfasst werden. Zur Realisierung einer besonders hohen Sicherheit kann jedoch vorgesehen sein, auch eine direkte Überwachung der Speicherzelle über wenigstens eine Temperatur und/oder es eine elektrische Spannung der Speicherzelle durchzuführen.

Umfasst die Speichervorrichtung beispielsweise mehrere elektrochemische Energiespeicherzellen mit jeweiligen Gehäusen, so kann an jedem der Gehäuse wenigstens ein Sensor angeordnet sein, welcher wie der zuvor beschriebene Sensor ausgestaltet ist. Diese Sensoren können beispielsweise ein Aufblähen der Zellen sowie ein Öffnen der Zellen detektieren. Die Sensoren können so verschaltet sein, dass sich ein Spannungsniveau eines von den Sensoren bereitgestellten Signals ändert, sobald ein Umfang einer der Speicherzellen einen vorgebbaren Grenzwert überschreitet und/oder eine der Speicherzellen birst. Der genannte Grenzwert ist vorzugsweise so zu wählen, dass mittels des jeweiligen Sensors eine unerwünschte Verformung der Speicherzelle detektiert wird, bevor die Speicherzelle öffnet, das heißt bevor eine Durchgangsöffnung im Gehäuse entsteht, aus der der Elektrolyt austreten könnte.

Bei der erfindungsgemäßen Speichervorrichtung ist es somit möglich, unerwünschte Veränderungen der elektrochemischen Energiespeicherzelle, die zu unerwünschten Folgereaktionen oder Folgeschäden führen könnten, besonders frühzeitig zu detektieren. Durch eine solche frühzeitige Detektion können sofortige Sicherheitsmaßnahmen, wie eine Außerbetriebnahme, ein Austausch und/oder ein sicheres Entsorgen des Moduls in dem sich die Speicherzelle befindet, eingeleitet werden, bevor die Speicherzelle öffnet.

Als eine Sicherheitsmaßnahme kann vorgesehen sein, dass ein Gehäuseelement, in welchem beispielsweise die Speicherzelle angeordnet ist, gelüftet wird oder dass ein Aufnahmeraum, in welchem die Speicherzelle angeordnet ist, evakuiert wird.

Bei einer vorteilhaften Ausführungsform der Erfindung weist das Gehäuse, welches auch als Zellgehäuse bezeichnet wird, zumindest eine Soll-Versagensstelle auf, wobei der Sensor in zumindest teilweiser Überdeckung mit der Soll-Versagensstelle angeordnet ist. Unter einer solchen Soll-Versagensstelle ist eine Stelle des Zellgehäuses zu verstehen, an der das Gehäuse im Gegensatz zu anderen Stellen des Gehäuses versagt, beispielsweise bricht oder birst, wenn beispielsweise ein im Gehäuse herrschender Druck einen vorgebbaren Schwellenwert überschreitet. Beispielsweise ist die Soll-Versagensstelle eine Soll-Bruchstelle. Zur Realisierung der Soll-Versagensstelle weist das Gehäuse beispielsweise an der Soll-Versagensstelle eine geringere Wanddicke als in sich daran anschließenden Bereichen auf. Übersteigt beispielsweise der im Zellgehäuse herrschende Druck den vorgebbaren Schwellenwert, so kommt es zu einem definierten und örtlich gezielten Öffnen des Gehäuses an der Soll-Versagensstelle und nicht etwa an davon unterschiedlichen Stellen, so dass ein unkontrolliertes Öffnen des Gehäuses im Fehlerfall vermieden werden kann.

Da das Zellgehäuse somit - im Fehlerfall - gezielt an der Soll-Versagensstelle und nicht etwa an anderen Stellen öffnet, und da der Sensor in zumindest teilweiser Überdeckung mit der Soll-Versagensstelle angeordnet ist, können unerwünschte Verformungen und insbesondere ein Öffnen des Gehäuses mittels des Sensors sicher, frühzeitig und direkt detektiert werden. Ferner ist es möglich, die Anzahl an Sensoren für die einzelne Speicherzelle sowie die Abmessungen des Sensors gering zu halten, da davon ausgegangen werden kann, dass, wenn es überhaupt zu einem Öffnen des Gehäuses kommt, dieses Öffnen an der Soll-Versagensstelle und nicht etwa an davon unterschiedlichen Stellen stattfindet.

Eine weitere Ausführungsform zeichnet sich dadurch aus, dass der Sensor als ein Draht oder als eine Folie ausgebildet ist. Dabei kann der Sensor vorzugsweise aus einem metallischen Werkstoff gebildet sein. Infolge der Ausgestaltung des Sensors als Draht oder Folie ist es möglich, unerwünschte Verformungen und insbesondere Umfangsvergrößerungen des Gehäuses präzise zu erfassen, da der Draht beziehungsweise die Folie besonders gut mit dem Gehäuse mitverformt wird. Der Draht beziehungsweise die Folie weist dabei eine nur geringe Dicke auf, so dass der Sensor besonders gut und insbesondere bereits bei geringen Verformungen des Gehäuses mitverformt wird. Dadurch ist es möglich, unerwünschte Verformungen des Gehäuses besonders frühzeitig und insbesondere bereits dann zu erfassen, bevor eine unerwünschte Durchgangsöffnung im Gehäuse entsteht.

Als weiterhin besonders vorteilhaft hat es sich gezeigt, wenn sich der Sensor in Umfangsrichtung des Gehäuses vollständig um dieses erstreckt. Mit anderen Worten kann vorgesehen sein, dass der Sensor um einen kompletten Umfang des Gehäuses gezogen wird. Hierdurch können eine unerwünschte Verformung und insbesondere ein Öffnen des Gehäuses auch dann erfasst werden, wenn diese Verformung beziehungsweise das Öffnen lediglich lokal auftritt und nicht den gesamten Umfang des Gehäuses beeinträchtigt.

Bei einer besonders vorteilhaften Ausführungsform der Erfindung ist der Sensor als elektrischer Leiter ausgebildet. Dadurch ist es beispielsweise möglich, die Verformung des Sensors und somit die Verformung des Gehäuses elektrisch zu erfassen. Infolge der Verformung des Gehäuses und der damit einhergehenden Verformung des Sensors ändert sich beispielsweise eine elektrische Eigenschaft des Sensors, welche besonders präzise erfasst werden kann. Dadurch können unerwünschte Verformungen des Gehäuses besonders frühzeitig erfasst werden.

Schließlich hat es sich als besonders vorteilhaft gezeigt, wenn der Sensor als Dehnmessstreifen ausgebildet ist. Hierdurch können unerwünschte Verformungen des Gehäuses besonders präzise und somit frühzeitig erfasst werden, so dass in der Folge etwaige Gegenmaßnahmen besonders frühzeitig eingeleitet werden können. Dadurch lässt sich ein besonders sicherer Betrieb der Speichervorrichtung realisieren.

Ein zweiter Aspekt der Erfindung betrifft ein Verfahren zum Überwachen einer Speichervorrichtung, insbesondere einer erfindungsgemäßen Speichervorrichtung, mit wenigstens einer elektrochemischen Energiespeicherzelle, welche zumindest ein Gehäuse und einen in dem Gehäuse aufgenommenen, insbesondere flüssigen, Elektrolyten aufweist. An dem Gehäuse ist wenigstens ein sich bei einer Verformung des Gehäuses mitverformender Sensor angeordnet, mittels welchem infolge der Verformung des Sensors die Verformung des Gehäuses erfasst wird. Vorteilhafte Ausgestaltungen des ersten Aspekts der Erfindung sind als vorteilhafte Ausgestaltungen des zweiten Aspekts der Erfindung anzusehen und umgekehrt.

Mittels des erfindungsgemäßen Verfahrens lassen sich unerwünschte und insbesondere übermäßige Verformungen, insbesondere ein unerwünschtes Öffnen, des Gehäuses besonders präzise und frühzeitig erfassen, so dass ein besonders sicherer Betrieb der Speichervorrichtung geschaffen werden kann. Infolge des Erfassens der Verformung des Gehäuses können beispielsweise Gegenmaßnahmen eingeleitet werden, so dass Folgeschäden sicher vermieden werden können.

Bei einer vorteilhaften Ausführungsform des zweiten Aspekts der Erfindung stellt der Sensor wenigstens ein die Verformung des Sensors charakterisierendes Signal bereit, welches an eine Steuereinrichtung übertragen und von der Steuereinrichtung empfangen wird. Mittels der Steuereinrichtung wird in Abhängigkeit von dem Signal wenigstens ein Vorgang gestartet. Bei dieser Ausführungsform ist es somit möglich, nicht nur die unerwünschte Verformung des Gehäuses zu erfassen, sondern auch entsprechende Gegenmaßnahmen in Form des Vorgangs einzuleiten, so dass Folgeschäden vermieden beziehungsweise das Ausmaß von Folgeschäden gering gehalten werden kann. Insbesondere ist es möglich, das Signal des Sensors zu nutzen, um automatisch Schutzmaßnahmen zu aktivieren.

Als eine solche Schutzmaßnahme kann vorgesehen sein, einen Aufnahmeraum, in welchem die elektrochemische Energiespeicherzelle angeordnet ist, zu lüften. Im Rahmen dieses Lüftens wird dem Aufnahmeraum Luft zugeführt, um dadurch beispielsweise die Konzentration von aus dem Elektrolyt resultierenden Dämpfen zu reduzieren. Bei diesem Lüften kann es sich um ein aktives Lüften handeln, in dessen Rahmen beispielsweise mittels wenigstens eines Gebläses Luft aktiv in den Aufnahmeraum gefördert wird. Bei dem Lüften kann es sich ferner um ein passives Lüften handeln, in dessen Rahmen wenigstens eine Öffnung geöffnet wird, so dass der Aufnahmeraum über die geöffnete Öffnung mit einer Umgebung des Aufnahmeraums fluidisch verbunden ist. Somit kann beispielsweise Luft aus der Umgebung über die geöffnete Öffnung in den Aufnahmeraum einströmen, um dadurch die Konzentration von Dämpfen aus dem Elektrolyten zu reduzieren.

Als besonders vorteilhaft hat es sich gezeigt, wenn der Vorgang umfasst, dass wenigstens ein Hinweissignal, insbesondere ein optisches und/oder akustisches Hinweissignal, ausgegeben wird. Hierdurch können Personen auf die unerwünschte Verformung der Speicherzelle und somit auf einen von einem Normalbetrieb unterschiedlichen Betrieb der Speichervorrichtung aufmerksam gemacht und gewarnt werden.

Schließlich hat es sich als besonders vorteilhaft gezeigt, wenn der Vorgang umfasst, dass wenigstens eine Nachricht an zumindest ein mobiles Endgerät übermittelt wird. Hierdurch ist es insbesondere möglich, Service-Personal zu benachrichtigen, so dass das Service-Personal Sicherheitsmaßnahmen einleiten kann. Bei der Nachricht handelt es sich beispielsweise um eine SMS (short message service) oder eine andere Nachricht. Auch andere Vorgänge oder Techniken sind denkbar, um die aus der übermäßigen Verformung des Gehäuses resultierenden Folgen zu vermeiden oder zumindest deren Ausmaß gering zu halten.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- FIG 1: eine schematische Seitenansicht einer Speichervorrichtung gemäß einer ersten Ausführungsform, mit wenigstens einer elektrochemischen Energiespeicherzelle, welche zumindest ein Gehäuse aufweist, und mit wenigstens einem an dem Gehäuse angeordneten und sich bei einer Verformung des Gehäuses mitverformenden Sensor, mittels welchem infolge der Verformung des Sensors die Verformung des Gehäuses erfassbar ist; und
- FIG 2: eine schematische Seitenansicht der Speichervorrichtung gemäß einer zweiten Ausführungsform.

In den Figuren sind gleiche oder funktionsgleiche Elemente mit gleichen Bezugszeichen versehen.

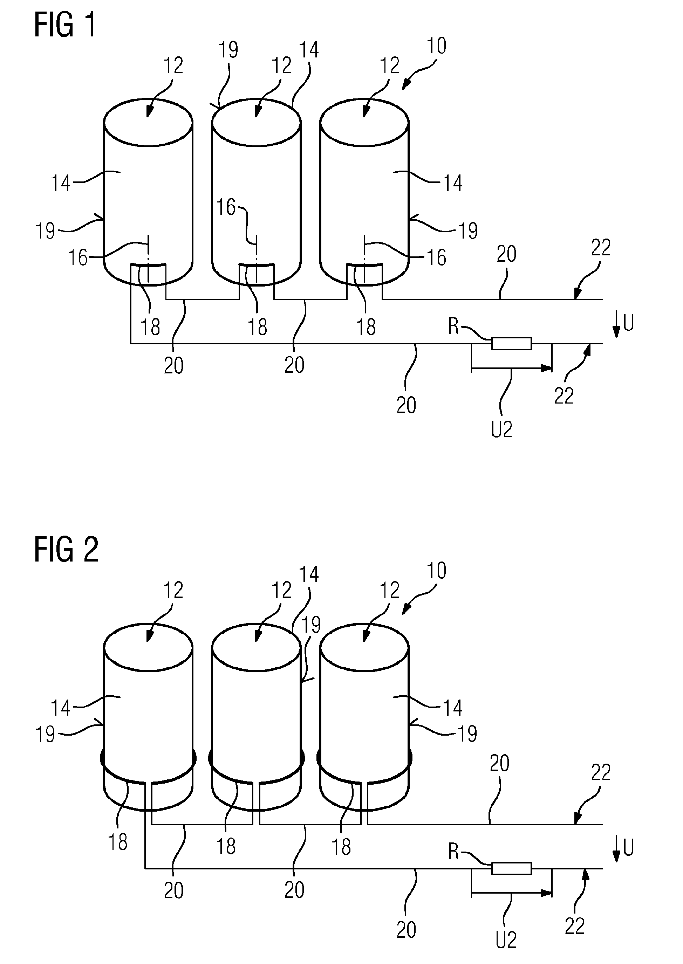

FIG 1 zeigt schematisch eine im Ganzen mit 10 bezeichnete Speichervorrichtung gemäß einer ersten Ausführungsform, wobei die Speichervorrichtung 10 als elektrochemischer Energiespeicher zum Speichern von elektrischer Energie, das heißt elektrischem Strom ausgebildet ist. Die Speichervorrichtung 10 kann beispielsweise als Batterie für Kraftwagen, insbesondere in Elektrofahrzeugen oder Hybrid-Fahrzeugen, zum Einsatz kommen. Ferner ist es möglich, die Speichervorrichtung 10 für anderweitige Anwendungen, insbesondere andere Fahrzeuge wie beispielsweise Flugzeuge, einzusetzen. Insbesondere sind auch stationäre Anwendungen, das heißt Anwendungen zur stationären Speicherung von Energie denkbar.

Die Speichervorrichtung 10 umfasst eine Mehrzahl von elektrochemischen Energiespeicherzellen 12, welche auch als Speicherzellen oder Zellen bezeichnet werden. Die jeweilige Speicherzelle umfasst ein Zellgehäuse 14, durch welches ein in FIG 1 nicht erkennbarer Aufnahmeraum begrenzt ist. In dem Aufnahmeraum sind ein Elektrolyt in Form eines flüssigen Elektrolyten sowie Elektrodenmaterial oder Elektroden aufgenommen. Die vorigen und folgenden Ausführungen können auch auf andere Elektrolyte übertragen werden, welche beispielsweise als Gele oder Feststoffe, das heißt Festelektrolyte ausgebildet sind. Die Speicherzellen sind beispielsweise zusammen mit einer Steuerelektronik zum Ansteuern und/oder Überwachen der Speicherzellen in einem weiteren Aufnahmeraum eines weiteren Gehäuses der Speichervorrichtung 10 aufgenommen, wobei dieses weitere Gehäuse in FIG 1 nicht dargestellt ist. Die in dem weiteren Gehäuse aufgenommenen Speicherzellen bilden somit zusammen mit der Steuerelektronik ein Modul, wobei die Speichervorrichtung 10 eine Mehrzahl von solchen Modulen umfassen kann. Beispielsweise sind die Speicherzellen elektrisch in Reihe und/oder parallel verschaltet.

Im Fehlerfall, das heißt bei einem fehlerhaften Betrieb wenigstens einer der elektrochemischen Energiespeicherzellen 12 kann es in dem jeweiligen Zellgehäuse 14 zu einer Temperaturerhöhung sowie zur Entstehung von Gas aus dem Elektrolyten kommen. Daraus resultiert ein Druckanstieg im Zellgehäuse 14, wodurch das Zellgehäuse 14 aufgebläht und gegebenenfalls bersten kann. Infolge des Berstens entsteht im Zellgehäuse 14 wenigstens eine Durchgangsöffnung, über welche Elektrolyt aus dem Zellgehäuse 14 austreten kann.

Das Entstehen einer solchen Durchgangsöffnung wird auch als Öffnen des jeweiligen Zellgehäuses 14 bezeichnet. Um in einem solchen Fehlerfall ein unkontrolliertes Öffnen des Zellgehäuses 14 und somit ein unkontrolliertes Austreten des Elektrolyten zu vermeiden, weist das jeweilige Zellgehäuse 14 eine Soll-Versagensstelle in Form einer Soll-Bruchstelle 16 auf. Die Soll-Bruchstelle 16 ist beispielsweise derart gebildet, dass das jeweilige Zellgehäuse 14 an der Soll-Bruchstelle 16 eine geringere Wanddicke als in sich an die Soll-Bruchstelle 16 anschließenden, anderen Bereichen aufweist. Übersteigt ein in dem Aufnahmeraum des jeweiligen Zellgehäuses 14 herrschender Druck einen vorgebbaren Schwellenwert, welcher beispielsweise durch die Wanddicke an der Soll-Bruchstelle 16 vorgegeben werden kann, so öffnet das jeweilige Zellgehäuse 14 zunächst an der Soll-Bruchstelle 16, bevor es an anderen Stellen des Zellgehäuses 14 öffnet. Beim Öffnen des jeweiligen Zellgehäuses 14 wird dieses entsprechend verformt. Alternativ ist es denkbar, dass das Zellgehäuse 14 infolge des Druckanstiegs verformt wird, ohne dass es jedoch zu einem Öffnen des Zellgehäuses 14 kommt.

Um nun einen besonders sicheren Betrieb der Speichervorrichtung 10 zu realisieren und ein Bersten des jeweiligen Zellgehäuses 14 zu vermeiden oder aus einem solchen Bersten resultierende Folgen zu vermeiden oder zumindest gering zu halten, ist an dem jeweiligen Zellgehäuse 14 wenigstens ein sich bei einer Verformung des jeweiligen Zellgehäuses 14 mitverformender Sensor 18 vorgesehen, welcher das Zellgehäuse 14 beispielsweise berührt. Der jeweilige Sensor 18 ist vorliegend an einer dem Aufnahmeraum abgewandten Außenseite 19 des Zellgehäuses 14 zumindest mittelbar und vorzugsweise direkt angeordnet und wird, wenn sich das Zellgehäuse 14 beispielsweise aufbläht, mitverformt, so dass der Sensor 18 infolge der Verformung des Zellgehäuses 14 in wenigstens einer Dimension vergrößert wird und gegebenenfalls sogar zerstört wird. Unter einer solchen Zerstörung ist beispielsweise ein Reißen, Brechen und/oder ein anderweitiges Versagen des jeweiligen Sensors 18 zu verstehen. Der jeweilige Sensor 18 ist bei der ersten Ausführungsform lediglich lokal vorgesehen. Dies bedeutet, dass sich der jeweilige Sensor 18 in Umfangsrichtung des jeweiligen Zellgehäuses 14 nicht vollständig um das Zellgehäuse 14 erstreckt, sondern der jeweilige Sensor 18 erstreckt sich lediglich über einen Teilbereich des Zellgehäuses 14, insbesondere der Außenseite 19.

Um eine Verformung, insbesondere ein Öffnen, des Zellgehäuses 14 besonders präzise erfassen zu können, ist der Sensor 18 in zumindest teilweiser Überdeckung mit der Soll-Bruchstelle 16 angeordnet. Vorliegend ist der jeweilige Sensor 18 als elektrischer Leiter ausgebildet, wobei der jeweilige Sensor 18 beispielsweise ein dünner Draht aus einem metallischen Werkstoff ist. Der Sensor 18 ist dabei derart dimensioniert, dass der Sensor 18 versagt, sobald an der Soll-Bruchstelle 16 eine merkliche Verformung des Zellgehäuses 14 stattfindet.

Die Sensoren 18 sind mit jeweiligen Verbindungsleitungen 20 elektrisch verbunden und dabei über die Verbindungsleitungen 20 elektrisch in Reihe zueinander geschaltet. Die Reihenschaltung der Sensoren 18 wird um wenigstens einen elektrischen Widerstand R ergänzt. An jeweiligen Enden 22 der Verbindungsleitungen 20 wird eine Versorgungsspannung U angelegt, wobei über dem Widerstand R eine elektrische Spannung U2 abfällt. Über diese Spannung U2 am Widerstand wird erkannt, wenn wenigstens einer der Sensoren 18 versagt, insbesondere gerissen, ist. In einem solchen Fall kann kein elektrischer Strom mehr durch die Verbindungsleitungen 20 strömen, und die elektrische Spannung U2 am Widerstand R wird Null.

Die erste Ausführungsform ist insbesondere verwendbar, wenn die Speicherzellen als Rundzellen oder als prismatische Zellen ausgebildet sind, welche eine Soll-Bruchstelle aufweisen.

Dadurch, dass der jeweilige Sensor 18 am jeweiligen Zellgehäuse 14 angeordnet ist und sich bei einer Verformung des jeweiligen Zellgehäuses 14 mitverformt, können übermäßige Verformungen und insbesondere ein Öffnen des jeweiligen Zellgehäuses 14 direkt mittels des jeweiligen Sensors 18 erfasst werden. Eine indirekte Erfassung einer solchen Verformung, beispielsweise über eine Temperatur und/oder einen elektrischen Strom der Speichervorrichtung 10 kann erfolgen, ist jedoch nicht zwingenderweise vorgesehen, da eine übermäßige Verformung, insbesondere ein Öffnen, der jeweiligen Speicherzelle direkt mittels des jeweiligen Sensors 18 erfasst werden kann. Insgesamt ist erkennbar, dass die Spannung U2 am Widerstand R ein Signal darstellt, welches die mittels des jeweiligen Sensors 18 erfasste Verformung des jeweiligen Zellgehäuses 14 charakterisiert. In Abhängigkeit von diesem Signal können dann beispielsweise Schutz- oder Gegenmaßnahmen eingeleitet werden, um die Folgen eines Aufblähens oder eines Austritts des Elektrolyten aus dem jeweiligen Zellgehäuse 14 zu vermeiden oder gering zu halten. Insbesondere ist es mittels des jeweiligen Sensors 18 möglich, übermäßige Verformungen des jeweiligen Zellgehäuses 14 zu erfassen, bevor das jeweilige Zellgehäuse 14 öffnet. Eine übermäßige Verformung des jeweiligen Zellgehäuses 14 wird jedoch spätestens dann mittels des jeweiligen Sensors 18 erfasst, wenn das jeweilige Zellgehäuse 14 an der jeweiligen Soll-Bruchstelle 16 öffnet, da spätestens bei einem solchen Öffnen des Zellgehäuses 14 der jeweilige Sensor 18 derart verformt wird, dass er reißt beziehungsweise versagt.

FIG 2 zeigt eine zweite Ausführungsform der Speichervorrichtung 10. Bei der zweiten Ausführungsform ist der jeweilige Sensor 18 nicht lokal angeordnet, sondern der jeweilige Sensor 18 erstreckt sich in Umfangsrichtung des Zellgehäuses 14 vollständig um das jeweilige Zellgehäuse 14. Mit anderen Worten ist der jeweilige Sensor 18 auch bei der zweiten Ausführungsform als elektrischer Leiter ausgebildet, welcher sich nun jedoch um einen kompletten Umfang des jeweiligen Zellgehäuses 14 herum erstreckt. Diese zweite Ausführungsform ist besonders vorteilhaft für Speicherzellen, die keine Soll-Bruchstelle aufweisen. Ferner kann die zweite Ausführungsform insbesondere für Speicherzellen verwendet werden, welche als sogenannte Pouch-Zellen ausgebildet sind.

Bei einer weiteren, in den Figuren nicht gezeigten Ausführungsform ist es denkbar, dass der jeweilige Sensor 18 als Dehnmessstreifen ausgebildet ist, welcher auch als Dehnungsmessstreifen bezeichnet wird. Zur Auswertung des Signals ist hierbei eine entsprechende elektrische Schaltung vorgesehen.

Ferner kann bei einer Ausführungsform vorgesehen sein, dass das Signal an eine Steuereinrichtung, insbesondere an eine elektronische Steuereinrichtung, der Speichervorrichtung 10 übertragen und von der Steuereinrichtung empfangen wird. Bei der Steuereinrichtung handelt es sich beispielsweise um eine Recheneinrichtung, die das genannte Signal empfängt. Dadurch ist es möglich, dass mittels der Steuereinrichtung in Abhängigkeit von dem empfangenen Signal wenigstens eine Schutzmaßnahme aktiviert wird, wenn mittels wenigstens eines der Sensoren 18 eine übermäßige Verformung des jeweiligen Zellgehäuses 14 erfasst wird.

Im Rahmen der Schutzmaßnahme wird beispielsweise das weitere Gehäuse beziehungsweise der weitere Aufnahmeraum gelüftet. Vorzugsweise erfolgt vor dem Lüften ein Stilllegen der Speichervorrichtung 10, woraufhin gelüftet wird. Hierbei wird beispielsweise wenigstens eine als Durchgangsöffnung ausgebildete Öffnung des weiteren Gehäuses geöffnet, so dass durch die Öffnung Luft aus der Umgebung des weiteren Gehäuses in den weiteren Aufnahmeraum einströmen kann. Dabei kann es sich um ein aktives Lüften handeln. Dies bedeutet, dass mittels der Steuereinrichtung beispielsweise wenigstens ein Gebläse aktiviert wird, mittels welchem Luft durch die geöffnete Öffnung des weiteren Gehäuses hindurch in den weiteren Aufnahmeraum gefördert wird. Dadurch ist es möglich, die Konzentration von im weiteren Aufnahmeraum entstehenden Elektrolytdämpfen zu verringern. Alternativ oder zusätzlich kann mittels der Steuereinrichtung die Ausgabe eines akustischen und/oder optischen Signals bewirkt werden, wodurch Personen gewarnt werden können.

## Patentansprüche

1. Speichervorrichtung (10) mit wenigstens einer elektrochemischen Energiespeicherzelle (12), welche zumindest ein Gehäuse (14) und einen in dem Gehäuse (14) aufgenommenen Elektrolyten aufweist,
**dadurch gekennzeichnet, dass** an dem Gehäuse (14) wenigstens ein sich bei einer Verformung des Gehäuses (14) mitverformender Sensor (18) angeordnet ist, mittels welchem infolge der Verformung des Sensors (18) die Verformung des Gehäuses (14) erfassbar ist.

2. Speichervorrichtung (10) nach Anspruch 1,
**dadurch gekennzeichnet, dass** das Gehäuse (14) zumindest eine Soll-Versagensstelle (16) aufweist, wobei der Sensor (18) in zumindest teilweiser Überdeckung mit der Soll-Versagensstelle (16) angeordnet ist.

3. Speichervorrichtung (10) nach Anspruch 1 oder 2,
**dadurch gekennzeichnet, dass** der Sensor (18) als ein Draht oder als eine Folie ausgebildet ist.

4. Speichervorrichtung (10) nach einem der vorhergehenden Ansprüche,
**dadurch gekennzeichnet, dass** sich der Sensor (18) in Umfangsrichtung des Gehäuses (14) vollständig um dieses erstreckt.

5. Speichervorrichtung (10) nach einem der vorhergehenden Ansprüche,
**dadurch gekennzeichnet, dass** der Sensor (18) als elektrischer Leiter ausgebildet ist.

6. Speichervorrichtung (10) nach einem der vorhergehenden Ansprüche,
**dadurch gekennzeichnet, dass** der Sensor (18) als Dehnmessstreifen ausgebildet ist.

7. Verfahren zum Überwachen einer Speichervorrichtung (10) mit wenigstens einer elektrochemischen Energiespeicherzelle (12), welche zumindest ein Gehäuse (14) und einen in dem Gehäuse (14) aufgenommenen Elektrolyten aufweist, wobei an dem Gehäuse (14) wenigstens ein sich bei einer Verformung des Gehäuses (14) mitverformender Sensor (18) angeordnet ist, mittels welchem infolge der Verformung des Sensors (18) die Verformung des Gehäuses (14) erfasst wird.

8. Verfahren nach Anspruch 7,
**dadurch gekennzeichnet, dass** der Sensor (18) wenigstens ein die Verformung des Sensors (18) charakterisierendes Signal bereitstellt, welches an eine Steuereinrichtung übertragen und von der Steuereinrichtung empfangen wird, wobei mittels der Steuereinrichtung in Abhängigkeit von dem Signal wenigstens ein Vorgang gestartet wird.

9. Verfahren nach Anspruch 8,
**dadurch gekennzeichnet, dass** der Vorgang umfasst, dass wenigstens ein Hinweissignal, insbesondere ein optisches und/oder akustisches Hinweissignal, ausgegeben wird.

10. Verfahren nach Anspruch 8 oder 9,
**dadurch gekennzeichnet, dass** der Vorgang umfasst, dass wenigstens eine Nachricht an zumindest ein mobiles Endgerät übermittelt wird.
